# EUROPÄISCHE PATENTSCHRIFT

(11) **EP 0 659 538 B1**
(45) Veröffentlichungstag und Bekanntmachung des Hinweises auf die Patenterteilung: **17.03.1999**
(21) Anmeldenummer: 93120863.1
(22) Anmeldetag: 24.12.1993
(51) Int. Cl.: B29C 65/56

(54) **Vorrichtung zum Anbringen von Henkeln an Behältern**
Apparatus for attaching handles on containers
Dispositif pour placer des anses sur des récipients

(43) Veröffentlichungstag der Anmeldung: 28.06.1995
(73) Patentinhaber: Neue Maschinenfabrik GmbH, 38120 Braunschweig (DE)
(72) Erfinder: Peronard, Pierre-René, D-38110 Braunschweig (DE); Siegmund, Detlef, D-38102 Braunschweig (DE)
(74) Vertreter: Leine, Sigurd, Dipl.-Ing.

(56) Entgegenhaltungen:
- GB-A- 2 228 465
- US-A- 3 241 578
- US-A- 3 626 879

## Beschreibung

Die Erfindung betrifft eine Vorrichtung zum Anbringen von Henkeln mittels an ihren Enden angeordneter Löcher an an einer Außenwandung von Behältern angeordneten Haltezapfen.

Es ist allgemein bekannt, Henkel aus steifen Kunststoffstreifen in der Weise an Behälter anzubringen, daß die Henkel an ihren Enden mit Löchern versehen und diese Löcher auf Haltezapfen an der Außenwandung von Behältern aufgeknöpft werden, wobei die Haltezapfen an ihren äußeren Enden Flansche aufweisen, die ein Herabrutschen der Enden der Henkel verhindern. Dieses Aufknöpfen erfolgt von Hand und ist daher zeit- und kostenintensiv.

Durch US-PS 1 670 131 ist ein Behälter bekannt, der aus Metall besteht und an dem nach dem Buckelschweißverfahren Ohren angeschweißt sind, die jeweils ein Loch aufweisen, in die ein Haken am Ende eines bügelförmigen Henkels eingehakt ist. Die Ohren bestehen aus einem napfförmigen Grundkörper, von dessen Rändern sich ein Flansch erstreckt, aus dem rippenförmige Buckel vorstehen, während sich das Loch im Boden des Grundkörpers befindet. Zur Verbindung der Ohren mit dem Behälter aus Metall werden die Flansche der Ohren mit den Buckeln durch eine äußere Elektrode gegen die Außenwandung des Behälters gedrückt, an der von innen eine Gegenelektrode anliegt. Durch die erhöhten Übergangswiderstände im Bereich der Anlagen der Buckel ergibt sich eine Widerstandsverschweißung im Bereich der Buckel. Nach dem Anbringen der Ohren muß das Einhängen der Bügel mit den Haken in die Löcher der Ohren von Hand erfolgen. Die Fertigungskosten sind daher verhältnimäßig hoch.

Durch die Firmendruckschrift "Fully Automatic Ear Welding and Bailing Line Series 40" der Firma MFB Maschinenfabrik GmbH in D 38021 Braunschweig ist eine Vorrichtung zur Durchführung eines Verfahrens der zuvor genannten Art bekannt, bei dem die Henkel in der Maschine aus Drahtstücken geformt und mit ihren hakenförmigen Enden in die Löcher in den Ohren eingesetzt werden. Eine Anbringung von Henkeln aus Kunststoff ist mit dieser bekannten Vorrichtung nicht möglich.

Durch US-A-3 626 879 ist eine Vorrichtung der im Oberbegriff des Anspruchs 1 genannten Art bekannt. Bei dieser bekannten Vorrichtung weisen die Haltezapfen bereits Flansche auf, über die hinweg die länglich gestalteten Löcher an den Enden der Henkel auf die Zapfen knopfartig aufgedrückt werden. Dieser Vorgang ist kompliziert, aufwendig und führt häufig zu Fehlfunktionen. Außerdem bedingt er eine bestimmte Gestaltung des Loches an den Enden der Henkel, die zwar eine leichte Aufschiebbarkeit auf die Haltezapfen über deren Flansche hinweg ermöglichen, die aber gleichzeitig die Gefahr einschließen, daß sich die Henkel in ungünstigen Fällen von den Haltezapfen lösen, so daß der Behälter herunterfallen und sich sein Inhalt auf die Umgebung ergießen kann.

Der Erfindung liegt die Aufgabe zugrunde, eine Vorrichtung der im Oberbegriff des Anspruchs 1 genannten Art zu schaffen, die für die maschinelle Anbringung von Henkeln insbesondere aus Kunststoff an Haltezapfen an der Außenwandung von Behältern geeignet ist.

Die der Erfindung zugrundeliegende Aufgabe wird durch die im Kennzeichen des Anspruchs 1 angegebene Lehre gelöst.

Der Grundgedanke der Erfindung besteht darin, eine Vorrichtung vorzusehen, bei der die Haltezapfen erst dann mit einem Flansch versehen werden, wenn die Henkel mit ihren Löchern auf die Haltezapfen aufgebracht sind. Zum Erzeugen der Flansche der Haltezapfen nach dem Aufbringen der Enden der Henkel dient ein in Transportrichtung der zweiten Transportmittel hinter der Aufsetzstation angeordnetes Stauchwerkzeug, wobei zwischen der Aufsetzstation und der Stauchstation Anlageflächen für die Enden der Henkel vorgesehen sind, um die Enden auf den Haltezapfen zu halten, also während der Zeit, zu der die Haltezapfen noch ohne Flansche sind. äußeren Enden der hohlen Haltezapfen aufweitet, um so die Enden der Henkel auf den Haltezapfen zu sichern. Alle Vorgänge erfolgen im gleichen Arbeitstakt.

Eine zweckmäßige Weiterbildung der Erfindung besteht darin, daß in Transportrichtung der ersten Transportmittel vor der Biegestation ein Magazin für Henkel angeordnet ist. Dieses ist zweckmäßigerweise zur Aufnahme eines Stapels von übereinander angeordneten Matten nebeneinander angeordneter, über Stege miteinander verbundener Henkel ausgebildet. Solche Matten entstehen üblicherweise dann, wenn mehrere Henkel in einer Kunststoffspritzvorrichtung nebeneinander in einem Arbeitsgang gespritzt werden, wobei die Stege fertigungsbedingt entstehen. Der Boden des Magazins ist dabei zweckmäßigerweise durch die ersten Transportmittel gebildet, oberhalb deren in Transportrichtung ein Durchlaß für die jeweils unterste Matte gebildet ist. Zwischen dem Magazin und der Biegestation ist eine Trennstation zum Zertrennen der Matten zu Henkeln angeordnet.

Eine Weiterbildung dieser Ausführungsform besteht darin, daß die ersten Transportmittel durch einen Zahnriemen gebildet sind, wobei es zweckmäßig ist, daß an diesem ein Mitnehmer befestigt ist, dessen Höhe gleich oder kleiner als die Höhe der Henkel in dem Magazin ist. Der Antrieb des Zahnriemens kann in beliebiger Weise erfolgen, ist aber natürlich auf die Taktgeschwindigkeit der gesamten Vorrichtung abgestimmt, so daß im Ergebnis immer ein Vorschub um einen Schritt erfolgt, der einem abzutrennenden Henkel entspricht. Während des Transports der Henkel durch die ersten Transportmittel sind die Enden der Henkel zweckmäßigerweise durch Führungen gefangen. Zweckmäßigerweise sind außerdem Sperrklinken im Bereich der ersten Transportmittel vorgesehen, die ein Zurückrutschen der Henkel verhindern.

Eine Weiterbildung der Erfindung besteht darin, daß die Biegestation unterhalb der zu biegenden Henkel eine Auflagefläche für die Henkel aufweist, die im wesentlichen mit der Oberkante des ersten Transportmittels fluchtet. Oberhalb der Auflagefläche ist ein vertikal bewegbarer Klemmschlitten angeordnet, der gegen die Auflagefläche klemmbar ist, um so einen Henkel dazwischen im mittleren Bereich festzuklemmen. Außerdem ist ein vertikal bewegbarer Biegeschlitten vorgesehen, der außerhalb der Auflagefläche nach unten gerichtete Vorsprünge aufweist, die beim Absenken des Biegeschlittens gegen die Enden eines zu biegenden, zwischen Klemmschlitten und Auflagefläche eingeklemmten Henkels stoßen und die Enden nach unten biegen. Die Auflagefläche ist dabei zweckmäßigerweise eben, und da die Enden des Henkels nach unten gebogen werden, ist der Henkel schließlich insgesamt U-förmig.

Die Vorsprünge an dem Biegeschlitten weisen zweckmäßigerweise federbelastete Klinken auf, die nach innen vorstehen und beim Absenken des Biegeschlittens gegen die zu biegenden Enden der Henkel stoßen und diese umbiegen.

Weitere Einzelheiten und Vorteile sind in der nachfolgenden Beschreibung eines Ausführungsbeispiels der Erfindung erläutert.
- Fig. 1: zeigt schematisch von der Seite eine Gesamtansicht eines Ausführungsbeispiels einer Vorrichtung gemäß der Erfindung,
- Fig. 2: ist ein Schnitt II-II durch Fig. 1,
- Fig. 3A-3C: sind verkleinerte schematische Darstellungen von Fig. 2 zur Verdeutlichung von 3 Arbeitszuständen,
- Fig. 4: ist ein Schnitt IV-IV durch Fig. 1,
- Fig. 5: ist ein Schnitt V-V durch Fig. 1,
- Fig. 6A-6C: zeigen schematisierte Schnitte ähnlich Fig. 5 zur Verdeutlichung aufeinanderfolgender Arbeitsschritte,
- Fig. 7: ist eine etwas vergrößerte Seitenansicht einer Einzelheit aus Fig. 1 im Bereich der Schnitte II-II und V-V und
- Fig. 8: ist ein Schnitt VIII-VIII durch Fig. 1.

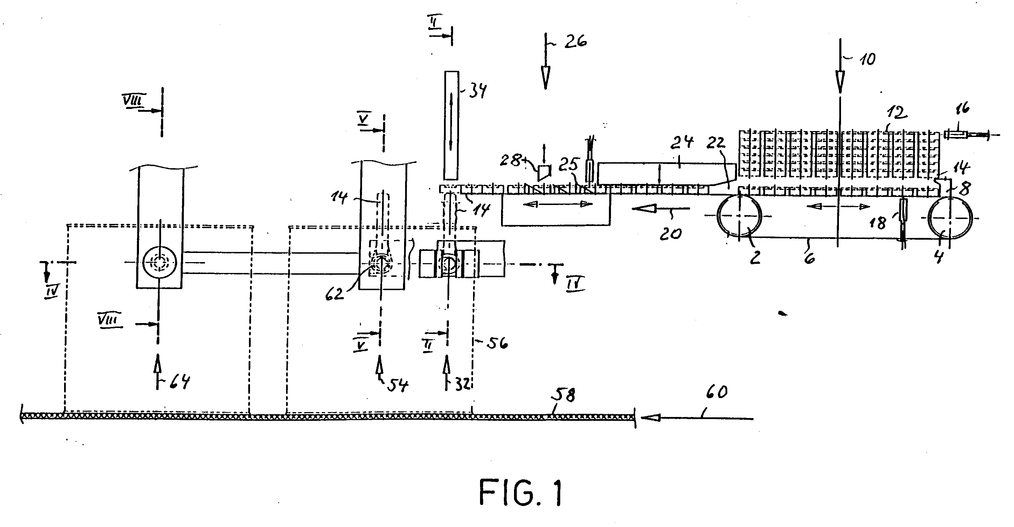

Fig. 1 zeigt in prinzipieller Darstellung von der Seite einen um zwei Walzen 2, 4 umlaufenden Zahnriemen 6, an dem ein Haken 8 befestigt ist. Oberhalb des oberen Trumms des Zahnriemens 6 befindet sich ein Magazin 10 mit einem Stapel von Matten 12, die aus mehreren, nebeneinander angeordneten Henkeln 14 bestehen, die durch nicht sichtbare, bei der Herstellung entstandene Stege miteinander verbunden sind. Mittels eines Näherungsschalters 16 wird durch nicht dargestellte Mittel ein Signal abgegeben, wenn die Höhe des Stapels von Matten 12 in dem Magazin 10 eine vorbestimmte Höhe unterschritten hat. Außerdem ist ein Näherungsschalter 18 vorgesehen, der das Vorhandensein einer Matte auf dem oberen Trumm des Zahnriemens abtastet und ein Signal abgibt, wenn eine neue Matte 12 aus dem Magazin 10 auf das obere Trumm des Zahnriemens 6 abgesenkt werden soll.

Von dem oberen Trumm des Zahnriemens 6 werden somit aufeinanderfolgend Matten 12 in Richtung eines Pfeiles 20 durch einen Durchlaß 22 unterhalb einer Führung 24 in eine durch einen Pfeil symbolisierte Trennstation 26 geführt, in der ein vertikal bewegbares Trennmesser 28 die Matten 12 in einzelne Henkel 14 zertrennt.

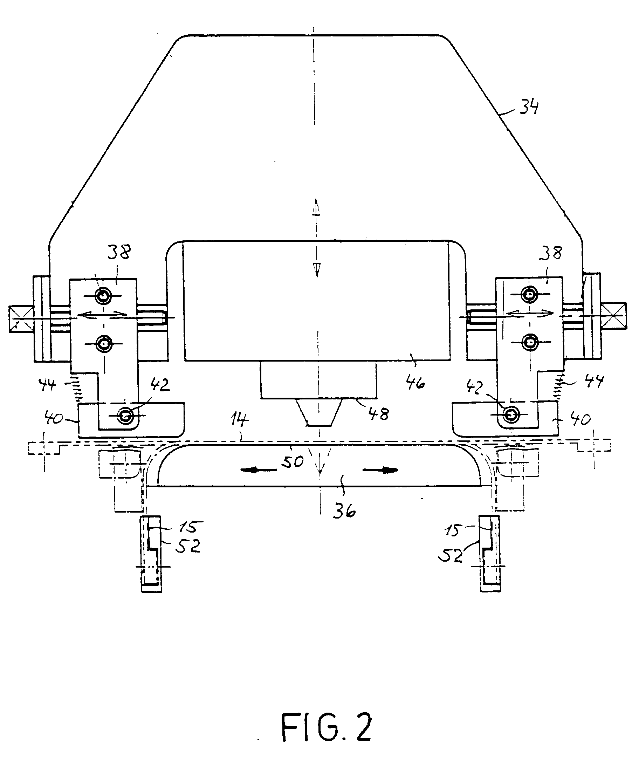

Auf dem weiteren Transportweg gelangen dann die Henkel 30 in eine durch einen Pfeil symbolisierte Biegestation 32, die einen auf- und abbewegbaren Biegeschlitten 34 und eine Auflage 36 aufweist. Weitere Einzelheiten der Biegestation 32 ergeben sich durch den in Fig. 2 dargestellten Schnitt II-II durch Fig. 1.

Aus Fig. 2 ist zu ersehen, daß der Biegeschlitten 34 im wesentlichen U-förmig ist und nach unten gerichtete Vorsprünge 38 aufweist, die seitlich verstellbar sind und an ihrem unteren Ende Klinken 40 aufweisen, die um Lagerstifte 42 verschwenkbar und mittels Federn 44 vorgespannt sind.

Zwischen den Vorsprüngen 38 ist ein auf- und abbewegbarer Klemmschlitten 46 vorgesehen, der einen Niederhalter 48 aufweist, der gegen eine Auflagefläche 50 der Auflage 36 klemmbar ist, um dort einen durch eine strichpunktierte Linie angedeuteten Henkel in seinem mittleren Bereich festzuklemmen, während er zunächst seine dargestellte gestreckte Lage hat. Unterhalb der Klinken 40 und im wesentlichen außerhalb der äußeren Kanten der Auflage 36 befinden sich Klauen 52 zur Aufnahme abgebogener Enden 15 des Henkels 14, wobei die Enden 15 in den Klauen 52 durch nicht gezeigte Sperrklinken gesichert sind.

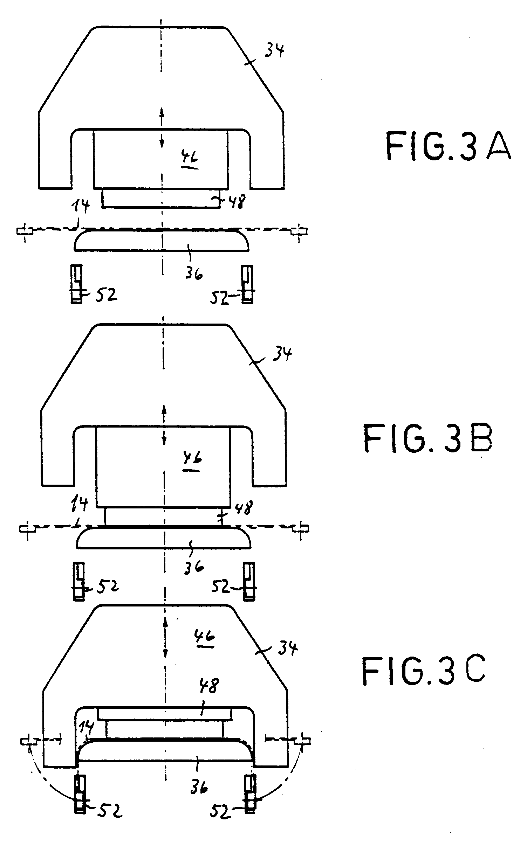

Zum Biegen eines Henkels 14 wird zunächst der Klemmschlitten 46 mit seinem Niederhalter 48 auf den mittleren Bereich des Henkels 14 gefahren und dieser auf der Auflagefläche 50 der Auflage 36 festgeklemmt. Daraufhin wird der Biegeschlitten 34 nach unten gefahren, so daß die Klinken 40 gegen die äußeren, freien Enden des noch gestreckten Henkels 14 stoßen und diese nach unten biegen, wobei die Klinken 40 aufgrund der Vorspannung durch die Federn 44 elastisch gegen die äußeren Enden des Henkels 14 stoßen und diese zum Schluß in eine nach unten weisende Lage bringen, in der sie sich in den Klauen 52 befinden. Diese Verfahrensschritte sind schematisch in den Figuren 3A-3C verdeutlicht.

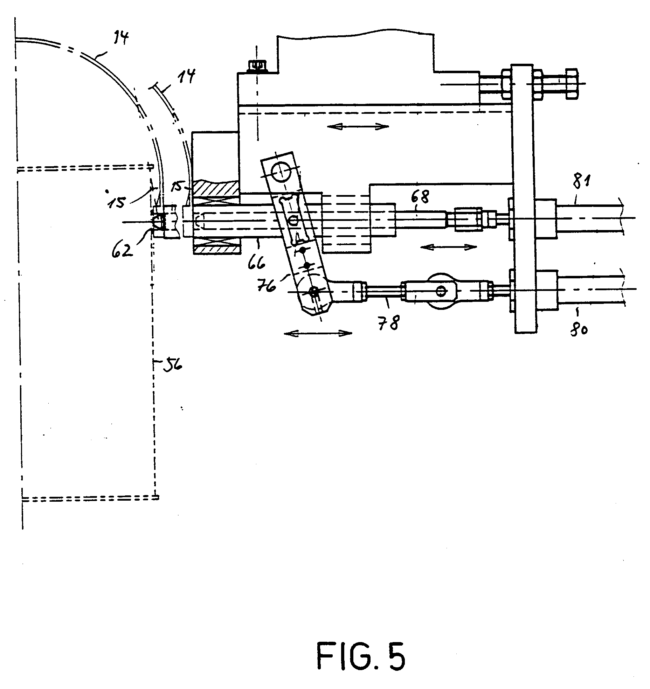

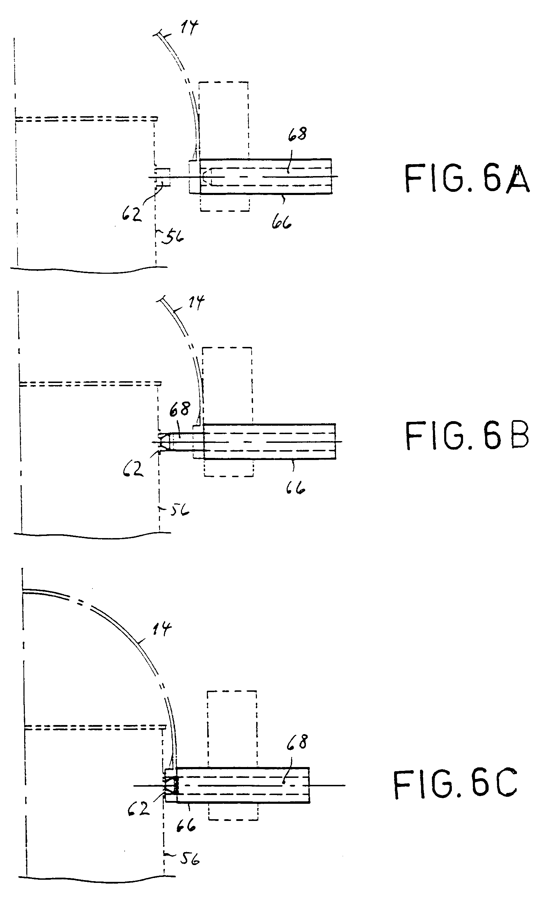

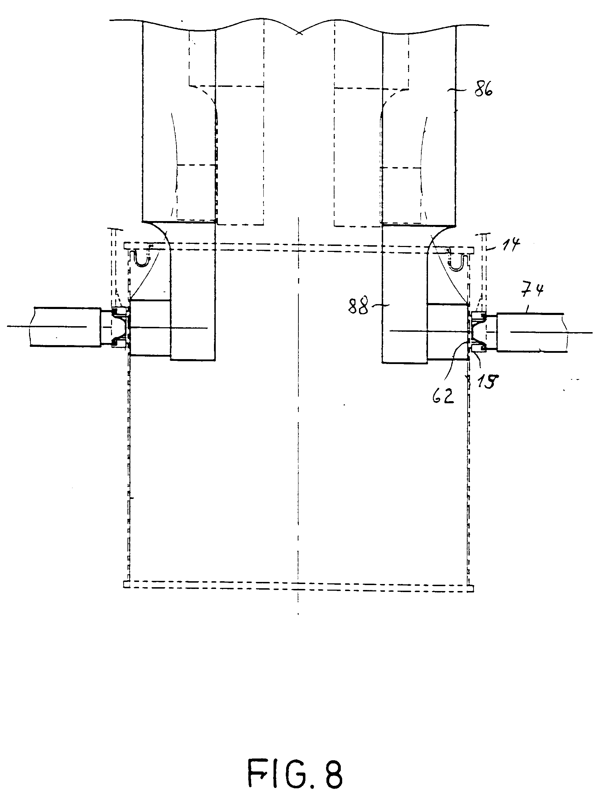

Es sei nun wieder auf Fig. 1 Bezug genommen, wo die in der zuvor beschriebenen Weise gebogenen Bügel 14 von der Biegestation 32 in eine durch einen Pfeil symbolisierte Aufsetzstation 54 bewegt werden, indem die Klauen 52 entsprechend angetrieben werden. Der Aufsetzstation 54 werden durch gestrichelte Linien dargestellte Behälter 56 mittels eines Magnetbandes 58, das sich in Richtung eines Pfeiles 60 bewegt, zugeführt. Die Behälter 56 weisen jeweils auf beiden Seiten hohle Haltezapfen 62 auf. Einzelheiten der Aufsetzstation 54 werden weiter unten noch in Verbindung mit Fig. 5 und 6 beschrieben. Aus der Aufsetzstation 54 wandern die Behälter 56 auf dem Magnetband 58 zu einer durch einen Pfeil symbolisierten Stauchstation 64, die weiter unten in Fig. 8 beschrieben werden wird.

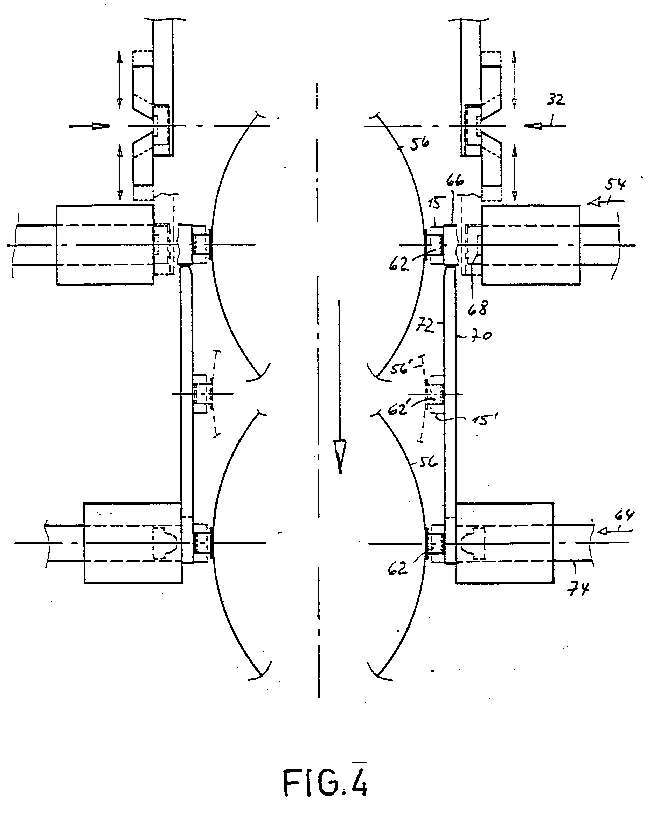

Fig. 4 zeigt einen Horizontalschnitt IV-IV durch Fig. 1. In der Aufsetzstation 54 ist das Ende 15 in einer Lage gezeigt, in der es bereits auf den Haltezapfen 62 des Behälters 56 aufgesetzt ist, und zwar vorgeschoben durch einen Stößel 66, nachdem zuvor eine Zentrierung durch einen Zentrierstift 68 erfolgt ist. Zwischen der Aufsetzstation 54 und der Stauchstation 64 befindet sich eine Schiene 70 mit einer Anlagefläche 72, an der das auf den Haltezapfen 62 aufgesetzte Ende 15 eines in dieser Darstellung nicht weiter sichtbaren Henkels entlanggleitet, wenn der Behälter 56 zu der Stauchstation 64 wandert. Eine Zwischenstellung ist mit gestrichelten Linien gezeichnet, wobei die entsprechenden Bezugsziffern mit einem Strich versehen sind.

In der Stauchstation 64 ist ein dornförmiges Stauchwerkzeug 74 angeordnet, das Teil einer Stauchzange ist und mittels eines pneumatischen Zylinders gegen den hohlen Haltezapfen 62 bewegbar ist, so daß dieser an seinem äußeren Ende aufgeweitet und dadurch das Ende 15 des zugehörigen Henkels auf dem Haltezapfen 62 gesichert ist.

Fig. 5 zeigt einen Schnitt V-V durch Fig. 1 und verdeutlicht Einzelheiten der Aufsetzstation 54. Die Aufsetzstation weist zunächst den durch einen pneumatischen Zylinder 81 betätigten Zentrierstift 68 auf, der koaxial in dem Stößel 66 verschieblich gehalten ist. Der Stößel 66 ist über einen Hebel 76 und eine Stange 78 durch einen pneumatisch betätigten Zylinder 80 hin- und herbewegbar.

Zur Ausrichtung des zunächst weiter von dem Behälter 56 entfernt liegenden Endes 15 des Henkels 14 in bezug zu dem hohlen Haltezapfen 62 wird zunächst der Zentrierstift 68 vorgeschoben, so daß er durch das in dem Ende 15 des Henkels 14 befindliche Loch und dann in den Hohlraum des hohlen Haltezapfens 62 eintritt und dabei aufgrund seiner konischen Spitze beides zueinander zentriert. Danach wird durch Betätigung des pneumatischen Zylinders 80 die Stange 78 und der Hebel 76 und damit auch der Stößel 66 gegen das von dem Behälter 56 noch entfernte Ende 15 des Henkels 14 bewegt, so daß das Ende mit seinem Loch auf den hohlen Haltezapfen 62 aufgeschoben wird. Währenddessen wird der Zentrierstift 68 zurückgezogen und dann der Behälter 56 mit dem darauf befindlichen, jedoch noch nicht gesicherten Henkel 14 mitgenommen, wie das bereits in Verbindung mit Fig. 4 erläutert worden ist. Die einzelnen Vorgänge beim Aufsetzen des Endes eines Henkels 14 in der beschriebenen Weise sind schematisch in den Fig. 6A-6C verdeutlicht.

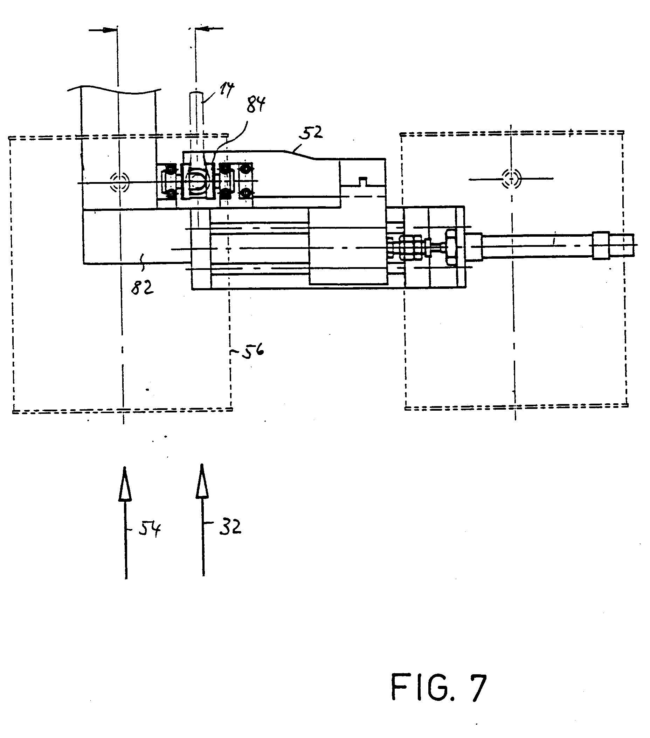

Fig. 7 zeigt vergrößert eine Einzelheit aus Fig. 1 im Bereich von Biegestation 32 und Aufsetzstation 54. Es ist deutlich zu erkennen, daß eine Klaue 52 durch einen Aufnahmeklotz 82 gehalten ist und federbelastete Sperrklinken 84 zur zeitweisen Fixierung der Enden 15 der Henkel 14 in den Klauen 52 aufweist.

Fig. 8 zeigt einen Schnitt VIII-VIII durch Fig. 1 im Bereich der Stauchstation 64. Das dornförmige Stauchwerkzeug 74 ist Teil einer Stauchzange 86, deren anderes Backenteil einen Gegenhalter 88 bildet und in das Innere gegen die Innenwandung des Behälters 56 schwenkbar ist. Bei Betätigung dieser Stauchzange 86 wird das äußere Ende des hohlen, d. h. rohrförmigen Haltezapfens 62 flanschförmig nach außen umgebörtelt, so daß das Lagerloch am Ende 15 des Henkels 14 auf dem Lagerzapfen 62 gesichert ist. Nach diesem Aufbörtelvorgang wird die Stauchzange 86 wieder geöffnet, so daß der nunmehr fertig mit einem Henkel 14 aus Kunststoff versehene Behälter 56 von dem Magnetband 58 aus der Vorrichtung heraus und zur weiteren Lagerung oder Verwendung transportiert wird.

## Patentansprüche

1. Vorrichtung zum Anbringen von Henkeln mittels an ihren Enden angeordneter Löcher an an einer Außenwandung von Behältern angeordneten Haltezapfen, wobei die Vorrichtung aufweist
erste Transportmittel zum schrittweisen Transport von Henkeln (30) aus Kunststoff in gestreckter Form in eine Biegestation (32),
Mittel in der Biegestation (32) zum Biegen der Enden (15) der Henkel (14) nach unten jeweils in eine Klaue (52),
Vorschubmittel zum schrittweisen Vorschub eines Paares von Klauen (52) mit einem an seinen Enden (15) gehaltenen Henkel (14) in eine Aufsetzstation (54),
zweite Transportmittel zum Transport von Behältern (56) mit an zwei gegenüberliegenden Seiten angebrachten hohlen Haltezapfen (62) in die Aufsetzstation (54),
Zentriermittel zum Zentrieren der Löcher an den Enden (15) der Henkel (14) relativ zu den Haltezapfen (62),
Aufsetzmittel zum Aufschieben der Enden (15) der Henkel (14) mit den Löchern auf die Haltezapfen (62),
**gekennzeichnet durch**
ein in Transportrichtung der zweiten Transportmittel hinter der Aufsetzstation angeordnetes Stauchwerkzeug (74),
zwischen der Aufsetzstation und der Stauchstation angeordnete Anlageflächen (72) für die Enden (15) der Henkel (14), um die Enden (15) auf den Haltezapfen (62) zu halten, und
ein in der Stauchstation (64) angeordnetes Stauchwerkzeug (74) zum Aufweiten der äußeren Enden der hohlen Haltezapfen (62), um die Enden (15) der Henkel (14) auf den Haltezapfen (62) zu sichern.

2. Vorrichtung nach Anspruch 1, **dadurch gekennzeichnet**, daß in Transportrichtung der ersten Transportmittel vor der Biegestation (32) ein Magazin (10) für Henkel (14) angeordnet ist.

3. Vorrichtung nach Anspruch 2**, dadurch gekennzeichnet**,
daß das Magazin (10) zur Aufnahme eines Stapels von übereinander angeordneten Matten (12) nebeneinander angeordneter, über Stege miteinander verbundener Henkel (14) ausgebildet ist,
daß der Boden des Magazins (10) durch die ersten Transportmittel gebildet ist,
daß oberhalb der ersten Transportmittel in dem Magazin (10) in Transportrichtung ein Durchlaß (22) für eine Matte gebildet ist und
daß zwischen dem Magazin (10) und der Biegestation (32) eine Trennstation (26) zum Zertrennen der Matten (12) zu Henkeln (14) angeordnet ist.

4. Vorrichtung nach Anspruch 3, **dadurch gekennzeichnet**, daß die ersten Transportmittel durch einen Zahnriemen (6) gebildet sind.

5. Vorrichtung nach Anspruch 4, **dadurch gekennzeichnet**, daß auf dem Zahnriemen (6) ein Haken (8) befestigt ist, dessen Höhe gleich oder kleiner ist wie die Höhe einer Matte (12) in dem Magazin (10).

6. Vorrichtung nach Anspruch 4, **dadurch gekennzeichnet**, daß oberhalb der ersten Transportmittel seitliche Führungen (24) für die Enden der Henkel (14) angeordnet sind.

7. Vorrichtung nach Anspruch 4, **dadurch gekennzeichnet**, daß im Bereich des Transportweges der Henkel (14) Sperrklinken (25) angeordnet sind, die ein Zurückrutschen der Henkel (14) verhindern.

8. Vorrichtung nach Anspruch 3, **dadurch gekennzeichnet**, daß die Trennstation (26) ein vorzugsweise durch einen Pneumatikzylinder betätigtes Trennmesser (28) aufweist.

9. Vorrichtung nach Anspruch 1, **dadurch gekennzeichnet**, daß die Biegestation (32) unterhalb der zu biegenden Henkel einer Auflagefläche (50) für die Henkel (14) aufweist, die im wesentlichen mit der Oberkante der ersten Transportmittel fluchtet,
daß oberhalb der Auflagefläche (50) ein vertikal bewegbarer Klemmschlitten (46) angeordnet ist, der vorzugsweise über einen daran befestigten Niederhalter (48) gegen die Auflagefläche (50) klemmbar ist,
daß ein vertikal bewegbarer Biegeschlitten (34) vorgesehen ist, der außerhalb der Auflagefläche (50) nach unten gerichtete Vorsprünge (38) aufweist, die beim Absenken des Biegeschlittens (34) gegen die Enden (15) eines zu biegenden Henkels (14) stoßen und die Enden (15) nach unten biegen.

10. Vorrichtung nach Anspruch 9, **dadurch gekennzeichnet**, daß die Vorsprünge (38) jeweils federbelastete Klinken (40) aufweisen, die nach innen vorstehen und beim Absenken des Biegeschlittens (34) gegen die zu biegenden Enden (15) der Henkel (14) stoßen.

11. Vorrichtung nach Anspruch 9, **dadurch gekennzeichnet**, daß die Vorsprünge (38) in Richtung der Henkel (14) verstellbar sind.

12. Vorrichtung nach Anspruch 1, **dadurch gekennzeichnet**, daß die Klauen (52) Sperrklinken (84) zur Sicherung der auf ihnen gehaltenen Enden (15) der Henkel (14) aufweisen.

13. Vorrichtung nach Anspruch 1, **dadurch gekennzeichnet**, daß die Mittel zum Zentrieren der Löcher in den Enden (15) der Henkel (14) relativ zu Haltezapfen (62) von außen durch die Löcher in die Haltezapfen (62) zufahrbare, vorzugsweise pneumatisch betätigte Zentrierstifte (68) aufweisen, die koaxial in vorzugsweise pneumatisch betätigten Stößeln (66) verschieblich angeordnet sind, wobei zuerst die Zentrierstifte (68) und dann die Stößel (66) betätigt werden.

14. Vorrichtung nach Anspruch 13, **dadurch gekennzeichnet**, daß das Stauchwerkzeug (74) Teil einer Stauchzange (86) ist und mit einem Gegenhalter (88) zusammenwirkt und vorzugsweise mittels eines Pneumatikzylinder betätigt ist.

## Claims

1. A device for attaching a handle by means of holes arranged on its ends in retaining lugs arranged on an outer wall of containers, whereby the device has
a first transport means for the step-wise transportation of handles (30) made from synthetic material in an elongated form, into a bending station (32),
means for bending the ends (15) of the handle (14) in the bending station (32) respectively downwards in a claw (52),
an advancing means for the step-wise advancing of a pair of claws (52) having a handle (14) held in its ends (15) in a setting-down station (54),
a second transport means for transportation of containers (56) having hollow retaining lugs (62) arranged on two opposing sides in the setting-down station,
a centring means for centring holes on the ends (15) of handle (14) relative to the retaining lugs (62),
a setting-down means for pushing the ends (15) of the handle (14) having holes onto retaining lugs (62),
**characterised** by
a compression tool (74) arranged behind the setting-down station in the transport direction of the second transport means,
a bearing surface (72) arranged between the setting-down station and the compression station for the ends (15) of the handle (14), so as to hold the ends (15) in the retaining lugs (62), and
a compression tool (74) arranged in a compression station (64) for expanding the outer ends of the hollow retaining lugs (62) so as to secure the ends (15) of the handle (14) in the retaining lugs (62).

2. A device according to claim 1, characterised in that a magazine (10) is arranged for the handle (14) in the transport direction of the first transport means in front of the bending station (32).

3. A device according to claim 2, characterised in that the
magazine (10) is constructed to incorporate a stack of mats (12) arranged next to one another and on top of one another, and are connected with one another by means of rods,
that the floor of magazine (10) is formed by the first transport means,
that an opening (22) for a mat is constructed in the transport direction above the first transport means in the magazine (10)
and that a separating station (26) is arranged for separating the mats (12) into handles (14).

4. A device according to claim 3, characterised in that the first transport means is constructed via a toothed belt (6).

5. A device according to claim 4, characterised in that a hook (8) is secured to the toothed belt (6), the height of which is either identical or smaller than the height of a mat (12) in the magazine (10).

6. A device according to claim 4, characterised in that lateral guides (24) are arranged above the first transport means for the ends of handle (14).

7. A device according to claim 4, characterised in that a locking pawl (25) is arranged in the region of the handle (14) transport path, which prevents the handle (14) backsliding.

8. A device according to claim 3, characterised in that separating station (26) has a separating blade (28), activated preferably through a pneumatic cylinder.

9. A device according to claim 1, characterised in that the bending station (32) has a supporting area (50) for handle (14) below the handle to be bent, which is essentially in alignment with the upper edge of the first transport means,
that a vertically moveable clamping slide (46) is arranged above the supporting area (50), which can be clamped against the supporting area (50) preferably via a holding-down clamp (48) to be secured to same,
that a vertically moveable bending slide (34) is provided which has downwardly directed projections (38) outside the supporting area (50), which abut against the ends (15) of the handle (14) to be bent on lowering the bending slide (34), and bend the ends (15) downwards.

10. A device according to claim 9, characterised in that projections (38) have respectively spring-loaded pawls (40) which project inwardly, and which rams against the to-be-bent ends (14) of handle (14) on lowering the bending slide (34).

11. A device according to claim 9, characterised in that projections (38) are adjustable in the direction of handle (14).

12. A device according to claim 1, characterised in that the claws (52) have locking pawls (84) for securing the handle (14) ends (15) held in same.

13. A device according to claim 1, characterised in that the means for centring the holes in the handle (14) ends (15) relative to retaining lugs (62), have preferably pneumatically actuated centring rods (68), which can be supplied from outside through holes in the retaining lugs (62), which are arranged coaxially moveable in preferably pneumatically actuated rams (66) whereby first the centring rods (68) and then the rams (66) are actuated.

14. A device according to claim 13, characterised in that compression tool (74) is a part of a compression clamp (86) and co-operates with a pressure pad (88) and is preferably actuated by means of a pneumatic cylinder.

## Revendications

1. Dispositif de montage d'anses, au moyen d'orifices disposés à leurs extrémités, sur des tourillons de support disposés sur une paroi extérieure de récipient, le dispositif présentant
un premier moyen de transport pour le transport pas à pas d'anses (30) en matière synthétique de forme allongée dans une station de pliage (32),
un moyen dans la station de pliage (32) pour le pliage des extrémités (15) des anses (14) vers le bas respectivement dans une griffe (52),
un moyen d'avancement pour l'avancement pas à pas d'une paire de griffes (52), avec une anse (14) maintenue à ses extrémités (15), dans une station de pose (54),
un second moyen de transport pour le transport de récipients (56), avec des tourillons de support (62) creux montés sur deux côtés opposés, dans la station de pose (54),
un moyen de centrage pour centrer les orifices aux extrémités (15) des anses (14) par rapport aux tourillons de support (62),
un moyen de pose pour faire coulisser les extrémités (15) des anses (14) avec les orifices sur les tourillons de support (62),
caractérisé par
un outil de refoulement (74) disposé derrière, dans la direction de transport du second moyen de transport, la station de pose,
des surfaces d'appui (72), disposées entre la station de pose et la station de refoulage, pour les extrémités (15) des anses (14) pour maintenir les extrémités (15) sur les tourillons de support (62) et
un outil de refoulement (74) disposé dans la station de refoulement (64) pour étirer les extrémités extérieures des tourillons de support (62) creux pour fixer les extrémités (15) des anses (14) sur les tourillons de support (62).

2. Dispositif selon la revendication 1,
caractérisé en ce qu'un magasin (10) pour des anses (14) est disposé avant, dans la direction de transport du premier moyen de transport, la station de pliage (32).

3. Dispositif selon la revendication 2,
caractérisé en ce
que le magasin (10) est conforme pour recevoir une file de nappes (12) disposées superposées danses (14) disposées côte à côte et reliées les unes aux autres par des entretoises,
que le fond du magasin (10) est formé par le premier moyen de transport,
que, au-dessus du premier moyen de transport, dans le magasin (10), un passage (22) pour une nappe est formé en direction de transport et
que, entre le magasin (10) et la station de pliage (32), est disposée une station de séparation pour fragmenter les nappes (12) en anses (14).

4. Dispositif selon la revendication 3,
caractérisé en ce que le premier moyen de transport est formé par une courroie crantée (6).

5. Dispositif selon la revendication 4,
caractérisé en ce qu'un crochet (8), dont la hauteur est égale ou inférieure à la hauteur d'une nappe (12) dans le magasin (10), est fixé sur la courroie crantée (6).

6. Dispositif selon la revendication 4,
caractérisé en ce que des guidages latéraux (24) pour les extrémités des anses (14) sont disposés au-dessus du premier moyen de transport.

7. Dispositif selon la revendication 4,
caractérisé en ce que des cliquets d'arrêt (20), qui empêchent un glissement de retour des anses (14), sont disposés dans la zone du trajet de transport des anses (14).

8. Dispositif selon la revendication 3,
caractérisé en ce que la station de séparation (26) présente un couteau séparateur (28) actionné de préférence par un cylindre pneumatique.

9. Dispositif selon la revendication 1,
caractérisé en ce
que la station de pliage (32) présente, au-dessous de l'anse à plier, une surface d'appui (50) pour des anses (14) qui est sensiblement alignée avec l'arête supérieure du premier moyen de transport,
qu'un chariot de serrage (46) mobile verticalement, qui peut, de préférence, être serré contre la surface d'appui (50) par un serre-flan (48) fixé dessus, est disposé au-dessus de la surface d'appui (50),
qu'est prévu un chariot de pliage (34) mobile verticalement qui présente en dehors de la surface d'appui (50) des saillies (38) dirigées vers le bas qui poussent contre les extrémités (15) d'une anse (14) à plier, lors de la descente du chariot de pliage (34), et plient les extrémités (15) vers le bas.

10. Dispositif selon la revendication 9,
caractérisé en ce que les saillies (38) présentent respectivement des cliquets (40) chargés par ressort qui font saillie vers l'intérieur et poussent contre les extrémités (15) à plier des anses (14) lors de la descente du chariot de pliage (34).

11. Dispositif selon la revendication 9,
caractérisé en ce que les saillies (38) sont mobiles en direction des anses (14).

12. Dispositif selon la revendication 1,
caractérisé en ce que les griffes (52) présentent des cliquets d'arrêt (84) pour la fixation des extrémités (15) des anses (14) retenues dessus.

13. Dispositif selon la revendication 1,
caractérisé en ce que le moyen de centrage des trous dans les extrémités (15) des anses (14) par rapport aux tourillons de support (62) présente des broches de centrage (68), pouvant être fermées de l'extérieur à travers les orifices dans les tourillons de support (62), de préférence actionnées pneumatiquement, qui sont disposées coaxialement à coulissement dans des coulisseaux (66) avantageusement actionnés pneumatiquement, les broches de centrage (68) étant actionnées d'abord et ensuite les coulisseaux (66).

14. Dispositif selon la revendication 13,
caractérisé en ce que l'outil de refoulement (74) est une partie d'une pince de refoulement (86) et coopère avec une contre-bouterolle (88) et est de préférence actionné au moyen d'un cylindre pneumatique.
